# EUROPÄISCHE PATENTANMELDUNG

(11) **EP 2 662 956 A1**
(43) Veröffentlichungstag der Anmeldung: **13.11.2013**
(21) Anmeldenummer: 12167320.6
(22) Anmeldetag: 09.05.2012
(51) Int. Cl.: H02K 3/487

(54) **Nutverschlussanordnung und Verfahren zum Fixieren von Wicklungsstäben in Nuten elektrischer Maschinen**

(71) Anmelder: ABB Research Ltd., 8050 Zürich (CH)
(72) Erfinder: Zant, Nikolaus, CH-8048 Zürich (CH); Velthuis, Rudi, D-79787 Lauchringen (DE); Gerig, Willi, 5242 Birr (CH); Gasparini, Rico, 5408 Ennetbaden (CH)
(74) Vertreter: ABB Patent Attorneys

(57) **Zusammenfassung**

Nutverschlussanordnung mit einem Nutenstein (2), einem Bezugskörper (3a) sowie mindestens einem Federelement (4), das in einem vorgespannten Zustand mittels eines Haftmittels (5) lösbar am Bezugskörper (3a) befestigt ist, wobei die Nutverschlussanordnung durch ihre Form eine Längsachse (6) definiert. Im vorgespannten Zustand des mindestens einen Federelements (4) ist zwischen dem mindestens einen Federelement (4) und dem Bezugskörper (3a) nebst dem Haftmittel (5) ein Distanzhalter (7a) angeordnet.

## Beschreibung

### TECHNISCHES GEBIET

Die vorliegende Erfindung betrifft ein Verfahren zur Fixierung von Leitern oder Wicklungsstäben in Nuten von elektrischen Maschinen, beispielsweise von Generatoren, sowie eine dazu geeignete Nutverschlussanordnung.

### TECHNOLOGISCHER HINTERGRUND UND STAND DER TECHNIK

Auf die in den Nuten elektrischer Maschinen angeordneten Leiterstäbe und Spulen, nachstehend vereinfachend Wicklungen genannt, wirken unter der Wechselwirkung des die Wicklungen durchfliessenden elektrischen Stromes und des magnetischen Feldes im Luftspalt Kräfte wechselnder Richtung ein. Darüber hinaus soll die Wicklung selbst bei Vibrationen und Setzerscheinungen der Wicklung zuverlässig in der Nut gehalten werden. Es ist daher notwendig, diese Wicklungen im Wesentlichen spielfrei in den Nuten zu halten.

Aus der W02008/142024A1 ist ein Verfahren zum Fixierung von Leitern oder Wicklungsstäben in Nuten von elektrischen Maschinen bekannt, bei welchen Nutverschlussanordnungen in die Nuten einschiebbar sind, bei denen die Nutverschlussanordnungen mindestens ein Federelement in einem vorgespannten Zustand aufweist, welches nach erfolgter Positionierung der Nutverschlussanordnung in der Nut aktivierbar ist. Die durch ihre Form eine Längsachse definierende Nutverschlussanordnung weist mindestens ein sandwichartig zwischen einem Nutenstein und einem Bezugskörper der Nutverschlussanordnung gehaltenes Federelement auf, um im Betrieb der elektrischen Maschine die zur Fixierung der elektrischen Leiter/Wicklungen erforderlichen Kräfte zu gewährleisten. Im vorgespannten Zustand ist das mindestens ein Federelement mit einem Haftmittel lösbar am Bezugskörper, typischerweise einem Druckstück, befestigt. Das Haftmittel sorgt dafür, dass eine sich in Richtung einer Hochachse erstreckende Gesamthöhe der Nutverschlussanordnung im vorgespannten Zustand des mindestens einen Federelements masslich geringer ist, als in einem aktivierten Zustand des mindestens einen Federelements.

Insbesondere dann, wenn das mindestens eine Federelement im entspannten Zustand in Richtung der Längsachse gesehen einen nicht-linearen Querschnitt aufweist (etwa wenn es keilförmig ist), kann es mitunter schwierig sein, dass das Haftmittel im vorgespannten Zustand des mindestens einen Federelements eine optimale Haftung zum Bezugskörper gewährleisten kann.

### ZUSAMMENFASSUNG DER ERFINDUNG

Es ist daher ein Ziel der vorliegenden Erfindung, die Haftkraft des Haftmittels zu verbessern und ein entsprechendes Verfahren zum Fixieren von Wicklungsstäben in Nuten elektrischer Maschinen vorzulegen.

Hinsichtlich der Nutverschlussanordnung wird diese Aufgabe durch eine Nutverschlussanordnung gemäss Anspruch 1 gelöst.

In einer Basisausführung weist die Nutverschlussanordnung einen Nutenstein, einen Bezugskörper sowie mindestens ein Federelement auf, das in einem vorgespannten Zustand mittels eines Haftmittels lösbar am Bezugskörper befestigt ist. Die Nutverschlussanordnung definiert durch ihre Form eine Längsachse. Im vorgespannten Zustand des mindestens einen Federelements ist zwischen dem mindestens einen Federelement und dem Bezugskörper nebst dem Haftmittel ein Distanzhalter angeordnet.

Unter dem Begriff 'vorgespannter Zustand' wird nachfolgend ein Festhalten des mindestens einen Federelements mit Hilfe des Haftmittels in einem gespannten Zustand verstanden. Das Haftmittel sorgt dafür, dass eine sich in Richtung einer Hochachse erstreckende Gesamthöhe der Nutverschlussanordnung im vorgespannten Zustand des mindestens einen Federelements masslich geringer ist, als in einem aktivierten Zustand des mindestens einen Federelements, wodurch sich die Nutverschlussanordnung bequem in die Nut der elektrischen Maschine einschieben lässt. Im vorgespannten Zustand ist das mindestens eine Federelements nicht in seinem für den Betrieb der Nutverschlussanordnung ausgelegten Arbeitsbereich gespannt, sondern ausserhalb davon. Unter dem Begriff 'Haftmittel ' wird beispielsweise ein Klebstoff verstanden, welcher seine Klebewirkung bzw. Klebkraft oder Haltekraft bei Überschreiten einer bestimmten Temperatur im Wesentlichen verliert oder nach einer mechanischen Beanspruchung in zwei Fügepartnern übergeht. Bei diesem Kleber kann es sich bspw. um ein Harz handeln oder eine ähnliche polymere Komponente, deren Schmelzpunkt respektive Glasübergangspunkt respektive Erweichungspunkt bei einer Temperatur liegt, wie sie bei der Montage kurzzeitig eingestellt werden kann. Alternativ kann das Haftmittel aus einem Material bestehen, welches bei Zugabe von Wasser oder einem anderen Lösungsmittel seine Haftungseigenschaften verliert, sei es wegen der dadurch erfolgenden Verdünnung respektive Lösung oder infolge einer chemischen Reaktion.

Je nach Ausführungsform und Bedarf kann das mindestens eine Federelement ein flächiges Element sein, beispielsweise eine streifenförmige Blattfeder aus Isoliermaterial. Der Begriff flächig soll nicht als strikt planar verstanden werden, sondern auch in einer Richtung gebogene, rohrsegmentförmige Federelemente mit umfassen. Alternativ kann das mindestens eine Federelement auch eine Wellfeder sein. Wenn grössere Federkräfte zum Fixieren der Wicklungsstäbe in den Nuten erforderlich sind, können dieser mehrere Federelemente zu einem Federpaket gestapelt werden. Falls erforderlich sind dabei auch Federpakete einsetzbar, welche sowohl flächige Blattfedern, als auch Wellfedern umfassen.

Geeignete Federelemente weisen gute Federeigenschaften auf, wenn sie eine Vielzahl von elektrisch isolierenden, unidirektional in Richtung der Querachse ausgerichteten Fasern umfassen, welche durch ein warmfestes Harz miteinander verbunden sind. Dadurch entsteht ein Federelement, mit welchem sich entlang der Querachse in Richtung der Hochachse wirkende Federkräfte gewünschter Stärke aktivieren lassen. Die Querachse und die Hochachse verlaufen in einer gedachten Ebene, welche einen Querschnitt der Nut und der Nutverschlussanordnung wiedergibt. Ein maximaler Federweg stellt sich demnach etwa quermittig über eine Linie in Richtung der Hochachse ein.

Der Einsatz eines Distanzhalters führt unter anderem zu folgenden Vorteilen:
Erstens schützt er das Federelement während dem Aufbringen des Haftmittels, beispielsweise einem Verkleben, vor Delamination, das heisst, einer unbeabsichtigten, irreversiblen Auftrennung von Fasern und Harz, welche je nach Schweregrad zu einer massiven Reduktion oder gar Verlust der Federeigenschaften des Federelements führen kann.

Zweitens definiert der Distanzhalter durch seine Höhe in Richtung der Hochachse der Nutverschlussanordnung die Schichtdicke der Haftmittelschicht. Auf diese Wiese kann verhindert werden, dass sich in Richtung der Längsachse gesehen unerwünschte Lücken in der Haftmittelschicht bilden, und entsprechend keine Haftung zwischen Federelement und Bezugskörper resultiert.

Die Schichtdicke ist insofern relevant, als dass dünne Haft- bzw. Klebstoffschichten weit bessere Schälfestigkeiten aufweisen, als dickere Schichten, da in letzterem Fall die Scherkräfte innerhalb des Haftmittels bzw. Klebstoffs üblicherweise weit geringere Festigkeitswerte aufweisen. Anders ausgedrückt, gewährleistet der Distanzhalter eine in Richtung der Längsachse vorbestimmbare, regelmässige Schichtdicke des Haftmittels.

Drittens verhindert der Distanzhalter besonders bei verhältnismässig dünnen und relativ flexiblen Federelementen und/oder Bezugskörpern, dass beim Aufbringen des Haftmittels, beispielsweise per Verkleben, das Haftmittel unbeabsichtigterweise vollständig aus einer angedachten Haftzone zwischen dem mindestens einen Federelement und dem Bezugskörper herausgedrückt werden kann. Anders ausgedrückt gewährleistet der Distanzhalter durch seine Höhe, dass zumindest in seiner unmittelbaren Nähe stets ein Minimum an Haftmittel vorhanden ist.

Die Nutverschlussanordnung weist eine Breite auf, welche sich quer zur Längsrichtung in Richtung einer Querachse der Nutverschlussanordnung erstreckt. Eine symmetrische Verteilung des Haftmittels in einer Haftzone lässt sich erreichen, wenn der Distanzhalter bezüglich dieser Breite im Mittenbereich zwischen dem mindestens einen Federelement und dem Bezugskörper angeordnet ist. Unter Mittenbereich wird dabei ein Bereich in der Mitte der Nutverschlussanordnung verstanden, wobei der Distanzhalter bezüglich der Breite der Nutverschlussanordnung mittig oder zumindest mittig wirkend angeordnet ist.

Das Haftmittel ist in einer Haftzone angeordnet, welche Haftzone durch das mindestens eine Federelement im vorgespannten Zustand und den Bezugskörper (lateral, das heisst in Richtung der Hochachse) begrenzt ist, wobei die Haftzone einen sich senkrecht zur Längsachse erstreckenden Querschnitt aufweist, dessen Ausdehnung in Richtung einer sich quer zur Längsachse und quer zur Querachse erstreckenden Hochachse beim Distanzhalter am grössten ist. Besonders gute Haftergebnisse sind erzielbar, wenn das Haftmittel die Haftzone vollständig ausfüllt.

Falls die Nutverschlussanordnung in Richtung der Hochachse eine möglichst geringe Bauhöhe aufweisen soll, kann der Bezugskörper durch ein weiteres Federelement gebildet sein. Je nach Bedarf und Anforderungen kann das weitere Federelement baugleich zum erstgenannten mindestens einen Federelement sein, oder unterschiedlich dazu.

Wenn der Bezugskörper mehrheitlich als Distanzhalter oder als Niederhalter der elektrischen Wicklungen eingesetzt werden soll, so empfiehlt sich eine Ausführungsform, bei welcher der Bezugskörper zumindest in Richtung der Hochachse biegesteifer als das mindestens eine Federelement ist.

Um Sicherzustellen, dass der Distanzhalter nach dem Aufbrechen der Haftschicht des Haftmittels beim Aktivieren des mindestens einen Federelements sich nicht unkontrolliert in der elektrischen Maschine bewegen kann, ist der Distanzhalter in einem aktivierten Zustand des mindestens einen Federelements fest mit dem Federelement oder fest mit dem Bezugskörper verbunden. Je nach Ausführungsform kann der Distanzhalter in den Bezugskörper oder dem Federelement integriert sein oder dauerhaft mit ihm verbunden. In Letzterem Fall kann der Distanzhalter mittels eines weiteren Haftmittels am Federelement oder am Bezugskörper befestigt sein, wobei eine Haftung des weiteren Haftmittel grösser als diejenige Haftung des Haftmittels gemäss Anspruch 1 ist.

In Fällen, wo ein Aktivieren des mindestens einen Federelementes mechanisch erfolgen soll, schafft der Distanzhalter zugleich einen geeigneten Bereich zum effektiven Ansetzen eines Aufbrechwerkzeuges, mit welchem die Haftwirkung des Haftmittels zumindest zwischen dem Federelement und dem Bezugskörper brecheisenartig aufbrechbar ist.

Der Distanzhalter weist im vorgespannten Zustand des mindestens einen Federelementes eine sich quer zur Längsrichtung erstreckende Querausdehnung auf. Die Nutverschlussanordnung weist weiter eine Sollbruchstelle zum mechanischen Aktivieren des mindestens einen Federelements bildende Öffnung zur Aufnahme eines Aufbrechwerkzeuges auf. Diese Öffnung ist beispielsweise dadurch erzeugbar, dass der Distanzhalter unter Bewahrung (steifer Körper) oder Verengung (z.B. Schlauch) seiner Querausdehnung in Richtung der Längsachse aus der Nutverschlussanordnung herausziehbar ist. Im Fall einer Bewahrung seiner Querausdehnung ist der Distanzhalter ein im Wesentlichen steifer Körper. Damit der steife Distanzhalter überhaupt aus der Haftzone herausziehbar ist, soll er derart beschaffen sein, dass seine Mantelfläche keine oder maximal eine sehr geringe Haftung mit dem Haftmittel aufweist. Dies ist beispielsweise durch eine geeignete Materialpaarung Haftmittel-Distanzhalter oder durch ein mit Antihaftmittel beschichtete Mantelfläche des Distanzhalter erreichbar.

Als stellvertretende Ausführungsform eines Distanzhalters, dessen Querausdehnung sich unter Zug in Richtung der Längsachse verengt, sind an dieser Stelle etwa ein Gummiprofil oder ein duktiler Kunststoffschlauch genannt. Unter Zug in Richtung der Längsachse schnürt der Durchmesser des duktilen Distanzhalters ein, so dass sich die Oberfläche des Distanzhalters vom Haftmittel in der Haftzone ab schält. Je nach Ausführungsform des Distanzhalters entspricht eine Höhe des Distanzhalters im vorgespannten Zustand der Nutverschlussanordnung im Fall eines weichen, schlauchförmigen Distanzhalters beispielsweise desjenigen Masses, welches durch eine komplette Zusammenquetschung des Schlauchs in Querrichtung erzielbar ist.

Alternativ zu einem vollständigen Herausziehen des Distanzhalters aus der Nutverschlussanordnung sind auch Ausführungsformen realisierbar, bei welchen der (duktile) Distanzhalter seine Querausdehnung nach dem Ziehen in Längsrichtung bleibend verringert, so dass zwischen dem Haftmittel, dem mindestens einen Federelement sowie dem Bezugskörper und dem Distanzhalter eine als Sollbruchstelle zum Ansetzen eines Aufbrechwerkzeuges erzeugbar ist.

In einer möglichen Ausführung des Aufbrechvorgangs ist das Aufbrechwerkzeug ein schraubendreherähnlicher Gegenstand, dessen Klinge in einem ersten Schritt in eine Öffnung der Nutverschlussanordnung zwischen das mindestens eine Federelement und den Bezugskörper einbringbar ist. In einem nachfolgenden zweiten Schritt wird das freie Ende des schraubendreherähnlichen Gegenstandes an dessen Griff in Richtung der Hochachse der Nutverschlussanordnung um dessen Querachse bewegt oder mit einem Schlaggegenstand in die Nut eingeschlagen. In der Folge stemmt die Klinge des schraubendreherähnlichen Gegenstandes die vom Haftmittel begründete Haftverbindung in der Art eines Brecheisens, wodurch letztlich das mindestens eine Federelement aktivierbar ist. Die Höhe des Distanzstücks gewährleistet, dass ein Abstand zwischen dem mindestens einen Federelement und dem Bezugskörper so gross ist, dass das Aufbrechwerkzeug zuverlässig einführbar ist, und verringert gleichzeitig die Gefahr einer Delamination des mindestens einen Federelements infolge eines unpräzisen Ansetzen des Aufbrechwerkzeuges und einem - möglicherweise schlagartig erfolgenden - Ansetzen einer Aufbrechkraft.

Unter dem Begriff 'aktivieren' beziehungsweise unter 'Aktivierung' wird in dieser Offenbarung ein Überführen des mindestens einen Federelementes der Nutverschlussanordnung vom vorgespanntem Zustand in einen aktivierten Zustand durch ein Aufbrechen einer vom Haftmittel ausgeübten Haftkraft verstanden. Mit anderen Worten wird durch die Aktivierung die im vorgespannten Zustand des Federelementes vom Haftmittel gewährleistete Vorspannung des Federelementes durch ein soweit gelöst, dass das Federelement in seine angedachten Betriebszustand mit der vorgesehenen Krafteinwirkung auf die Leiterpackung der elektrischen Maschine einwirkt. Daraus folgt, dass das mindestens eine Federelement im Betriebszustand der Nutverschlussanordnung nicht gänzlich entspannt wird. Bei Bedarf sind beim Aufstemmen allfällige weitere Haftverbindungen des Haftmittels zwischen zwei benachbarten Federelementen und/oder zwischen dem Federelement und dem Nutenstein gleichzeitig mit aufbrechbar.

Falls der Distanzhalter im aktivierten Zustand des Federelementes in der Nutverschlussanordnung verbleiben soll, ist eine Basisausführung einer Aufnahmeöffnung zur Aufnahme eines Aufbrechwerkzeuges dadurch gebildet werden, dass der Distanzhalter in Richtung der Längsachse kürzer als eine Gesamtlänge der Nutverschlussanordnung ist, so dass Lücke entsteht. Diese Lücke bildet die Aufnahmeöffnung.

Falls der Distanzhalter im aktivierten Zustand des Federelementes in der Nutverschlussanordnung verbleiben soll, kann der Distanzhalter in Richtung der Längsachse stirnseitig alternativ eine Aufnahmeöffnung zur Aufnahme eines Aufbrechwerkzeuges aufweisen. Diese Aufnahmeöffnung ist in Richtung der Hochachse vom mindestens einen Federelement im vorgespannten Zustand und/oder dem Bezugskörper begrenzt.

Eine weitere Ausführungsform eines mechanisch aktivierbaren Federelements ist folgendermassen aufgebaut. Der Distanzhalter weist, beispielsweise endseitig, einen Aufbrechkörper auf. Dieser Aufbrechkörper ist im vorgespannten Zustand des mindestens einen Federelementes, also in Richtung der Längsachse, ausserhalb der Haftzone angeordnet. Der Aufbrechkörper hat zumindest in einer Richtung quer zur Längsachse eine Ausdehnung, die grösser ist, als eine Querausdehnung des Distanzhalters in der Haftzone. Je nach Ausführungsform hat der Aufbrechkörper beispielsweise eine pyramidenförmige, kugelförmige, sternförmige, kegelförmige Form, welche sich entgegen der Richtung des Herausziehens des Distanzhalters aus der Nutverschlussanordnung im Durchmesser keilförmig verdickt, das heisst masslich vergrössert. Alternativ sind auch geeignete zweidimensionale Geometrien, wie etwa ein Dreieck oder ein Kreis einsetzbar.

Ob der Distanzhalter seine Querausdehnung beim Herausziehen in Richtung der Längsachse aus der Nutverschlussanordnung bewahrt (im Wesentlichen steifer Körper) oder verengt (beispielsweise wenn er ein duktiler Schlauch ist) ist nicht relevant. Wichtig ist einzig, dass bei dieser Ausführungsform der Nutverschlussanordnung genügend stabil ist, um den Aufbrechkörper durch die vom Distanzhalter hinterlassene, tunnelförmige Öffnung in der Haftzone ganz hindurchziehen zu können, damit die Haftwirkung des Haftmittels über die ganze Länge der Nutverschlussanordnung mechanisch aufgehoben werden kann. Die tunnelförmige Öffnung definiert dabei die Sollbruchstelle im Haftmittel.

Eine alternative Form des Distanzhalters ist mehrteilig. Dabei weist der Distanzhalter einen ersten keilförmigen Formkörper und einen relativ zum ersten Formkörper bewegbaren zweiten keilförmigen Formkörper auf. Eine vom Haftmittel ausgeübte Haftkraft ist durch eine Relativbewegung des ersten Formkörpers zum zweiten Formkörper in Richtung der Längsachse mechanisch aufbrechbar ist. Die Relativbewegung ist beispielsweise mit Hammerschlägen über einer Durchschlag oder dergleichen auf den ersten Formkörper erzielbar. Mit Vorteil sind die Keilflächen so ausgebildet, dass sie einen geringen Reibungswiderstand zueinander haben. Weiter wird das Erzeugen der Relativbewegung erleichtert, wenn der erste Formkörper mantelseitig keine oder maximal eine sehr geringe Haftung mit dem Haftmittel eingeht. Wenn verhältnismässige grosse Wege in der Hochachse erforderlich sind, um die Haftverbindung aufzubrechen, so kann ein mehrteiliger Distanzhalter in Form eines Doppel- oder gar Mehrfachkeils eingesetzt werden.

Falls das mindestens eine Federelement nicht mechanisch, sondern beispielsweise thermisch aktivierbar ist, sind Ausführungsformen realisierbar, bei welchen der Distanzhalter in Richtung der Längsachse mehrteilig ist und in Längsrichtung diskontinuierlich über eine Länge der Nutverschlussanordnung verteilt angeordnet ist. Dabei ist es vorteilhaft, wenn die einzelnen Segmente des Distanzhalters möglichst regelmässig über die Länge der Nutverschlussanordnung verteilt, so dass deren Distanzhalterfunktion störungsfrei erhalten bleibt.

Wenn zudem verhindert werden soll, dass eine Nutverschlussanordnung mit vorgespanntem Federelement nach der Einführung der Nutverschlussanordnung in die Nut der elektrischen Maschine nicht unbeabsichtigt aus der Nut heraus fällt oder die vorgesehene Position in der Nut verlässt, so kann dies über eine Zusatzfunktion der erfindungsgemässen Nutverschlussanordnung erfolgen. In diesem Fall ist das mindestens eine Federelement über ein komprimierbares, elastisches Mittel am Nutenstein befestigt. Das elastische Mittel ist dabei derart beschaffen und dimensioniert, dass es in einer Nut einer elektrischen Maschine genügend Kompressionskraft in Richtung der Hochachse entwickelt, welche so stark ist, dass sie genügend Reibung zwischen dem Nutenstein und/oder Bezugskörper und Nut beziehungsweise Leiterpackung schafft, dass die Nutverschlussanordnung mit vorgespanntem Federelement nicht aus der Nut der elektrischen Maschine heraus fällt. In einer Ausführungsform des elastischen Mittels ist oder umfasst dieses einen Schaum, beispielsweise einen geschäumten Streifen oder Punkt, welcher vor dem Einschieben der Nutverschlussanordnung in die Nut mit einer Spritzpistole aufgebracht worden ist.

Hinsichtlich des Verfahrens zum Fixieren von Wicklungsstäben in Nuten elektrischer Maschinen wird diese Aufgabe durch eine Nutverschlussanordnung gemäss Anspruch 14 gelöst. Konkret beinhaltet das Verfahren zum mechanischen Aktivieren mindestens eines Federelementes einer Nutverschlussanordnung in einer Nut einer elektrischen Maschine, die folgenden Schritte:
a) Einschieben einer Nutverschlussanordnung mit mindestens einem Federelements in vorgespanntem Zustand gemäss einem der Ansprüche 1 bis 12 in eine Nut einer elektrischen Maschine;
b) Überführen des mindestens einen Federelementes der Nutverschlussanordnung vom vorgespannten Zustand in einen aktivierten Zustand durch ein Aufbrechen einer vom Haftmittel ausgeübten Haftkraft.

Je nach Ausführungsform ist das Aufbrechen einer vom Haftmittel ausgeübten Haftkraft durch Einwirkung von Wärme, mechanische Vibrationen, Schockwellen, elektromagnetische Wellen (etwa Mikrowellen), Ultraviolette, sichtbare oder IR-Lichteinstrahlung, eine chemische Reaktion (beispielsweise durch Zugabe von Wasser, einem Lösungsmittel oder einer Säure) einzeln oder in Kombination miteinander einsetzbar.

Fall erforderlich, kann ein gegebenenfalls vorhandener Freiraum zwischen Leiterstäben und Bezugskörper durch ein oder mehrere Einlageelemente wenigstens teilweise überbrückt werden. In einer Ausführungsform sind die Einlageelemente streifenförmig und aus Isolationsmaterial oder Metall, sofern die Anforderungen bezüglich des elektrischen Feldes genügend beachtet werden, und bildet ein Distanzstück.

Hinsichtlich der sich durch die Verwendung einer erfindungsgemässen Nutverschlussanordnung und der sich daraus ergebenden Vorteile wird auf die entsprechenden Textstellen der Beschreibung der Nutverschlussanordnung verwiesen.

Ein mechanisches Aufbrechen einer vom Haftmittel ausgeübten Haftkraft erfolgt je nach Gegebenheiten und Anforderungen beispielsweise via
a) Ein Herausziehen des Distanzhalters mitsamt einem daran befestigten, als Keil wirkenden Aufbrechkörper aus der Nutverschlussanordnung in Richtung der Längsachse durch eine vom Distanzhalter definierte, tunnelförmige Öffnung; oder
b) Ein Herausziehen des Distanzhalters homogenen Querschnitts aus der Nutverschlussanordnung in Richtung der Längsachse, gefolgt von einem Einbringen eines als Brecheisen wirkenden Aufbrechwerkzeuges in eine vom Distanzhalter hinterlassene, tunnelförmige Öffnung, und anschliessendem Aufstemmen; oder
c) Ein Einbringen eines als Brecheisen wirkenden Aufbrechwerkzeuges in eine stirnseitig (=in Richtung der Längsachse) angeordnete Aufnahmeöffnung der Nutverschlussanordnung beim Distanzhalter, und anschliessendem Aufstemmen; oder
d) Ein Einbringen eines als Brecheisen wirkenden Aufbrechwerkzeuges in eine stirnseitig (=in Richtung der Längsachse) angeordnete Aufnahmeöffnung des Distanzhalters, und anschliessendem Aufstemmen; oder
e) Ein Verschieben eines ersten keilförmigen Formkörper des Distanzhalters relativ zu einem zweiten keilförmigen Formkörper des Distanzhalters in Richtung der Längsachse.

### KURZE BESCHREIBUNG DER ZEICHNUNG

In der Zeichnung sind Ausführungsbeispiele der Erfindung rein schematisch dargestellt. Dabei zeigt:
- Fig. 1: eine erste Ausführungsform einer Nutverschlussanordnung mit Federelement im vorgespanntem Zustand im Querschnitt;
- Fig. 2: eine zweite Ausführungsform einer Nutverschlussanordnung mit Federelement im vorgespanntem Zustand im Querschnitt;
- Fig. 3: eine dritte Ausführungsform einer Nutverschlussanordnung mit Federelement im vorgespanntem Zustand im Querschnitt;
- Fig. 4: eine vierte Ausführungsform einer Nutverschlussanordnung mit Federelement im vorgespanntem Zustand im Querschnitt;
- Fig. 5a: eine fünfte Ausführungsform einer Nutverschlussanordnung mit Federelement im vorgespanntem Zustand im Längsschnitt;
- Fig. 5b: die fünfte Ausführungsform mit Federelement im aktivierten Zustand im Längsschnitt;
- Fig. 6a: eine sechste Ausführungsform einer Nutverschlussanordnung mit Federelement im vorgespanntem Zustand im Längsschnitt;
- Fig. 6b: die sechste Ausführungsform entlang Schnitt VI-VI in Figur 6a;
- Fig. 7a: eine siebte Ausführungsform einer Nutverschlussanordnung mit Federelement im vorgespanntem Zustand im Längsschnitt;
- Fig. 7b: die siebte Ausführungsform mit Federelement im erst teilweise aktivierten Zustand im Längsschnitt;
- Fig. 8a: eine achte Ausführungsform einer Nutverschlussanordnung mit Federelement im vorgespanntem Zustand im Querschnitt und entspanntem, elastischen Mittel;
- Fig. 8b: die achte Ausführungsform einer Nutverschlussanordnung mit Federelement im vorgespanntem Zustand im Querschnitt und komprimierten elastischen Mittel; und
- Fig. 8c: die achte Ausführungsform einer Nutverschlussanordnung mit Federelement in vorgespanntem Zustand im Querschnitt, eingebaut in einer Nut einer elektrischen Maschine.

### WEGE ZUR AUSFÜHRUNG DER ERFINDUNG

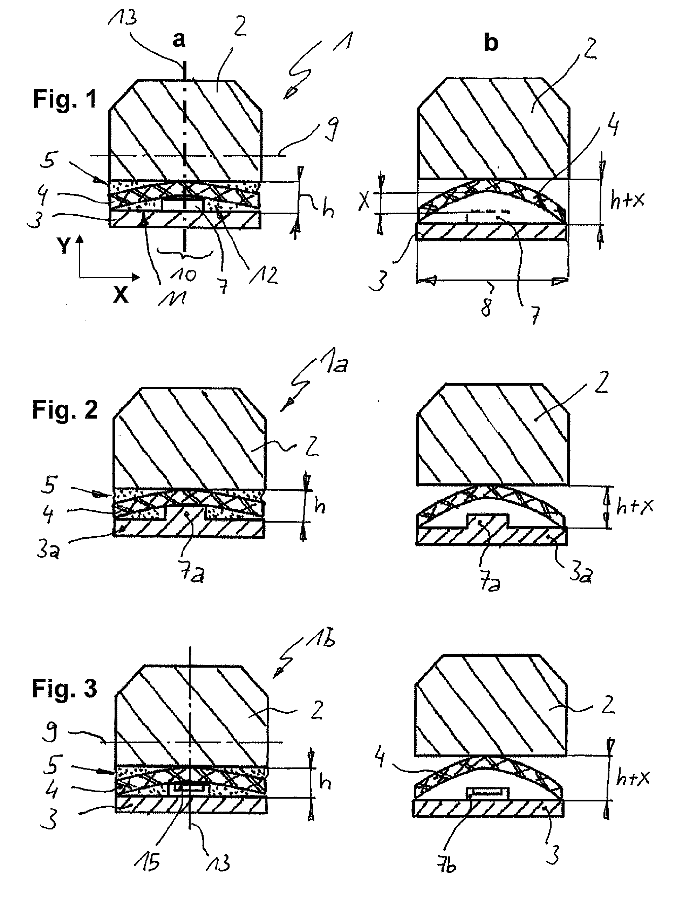

Die in **Figur 1a** im Querschnitt dargestellte, erste Ausführungsform einer erfindungsgemässen Nutverschlussanordnung 1 zeigt ein zwischen einem Nutenstein 2 und einem Bezugskörper 3 angeordnetes Federelement 4 in vorgespanntem Zustand. Die Figur 1 illustriert den Querschnitt durch die Nutverschlussanordnung 1, wobei sich die Richtungen X und Y quer zu einer Längsrichtung Z erstrecken und wobei Z gleichzeitig die Längsachse 6 der Nutverschlussanordnung bildet. Eine Querachse 9 der Nutverschlussanordnung erstreckt sich in Richtung X, während sich eine Hochachse 13 der Nutverschlussanordnung in Richtung Y erstreckt.

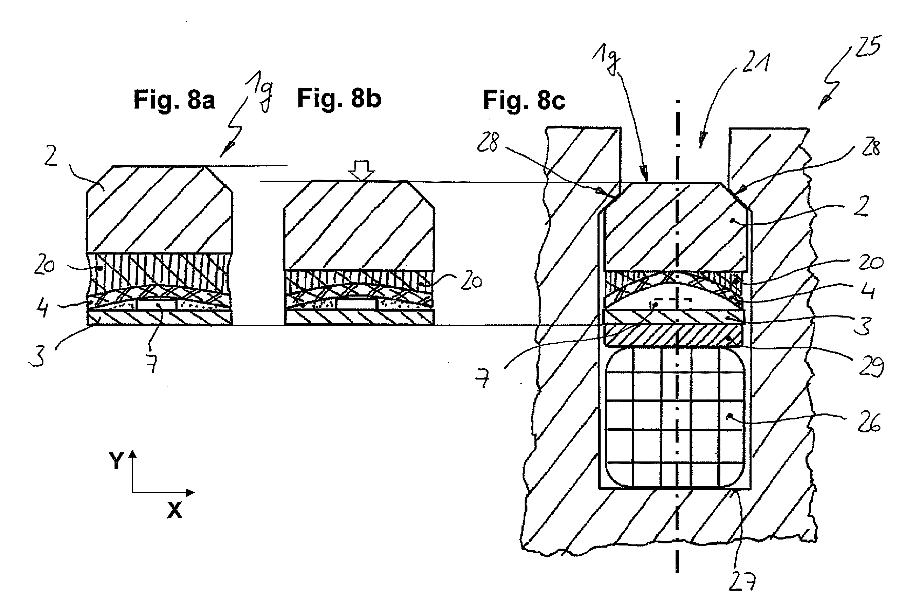

Mehrere Ausführungsformen der Nutverschlussanordnungen sind in den Figuren 1, 2, 3, 4 in der Abbildung links (mit "a" bezeichnet) im vorgespannten Zustand abgebildet, was als Figur 1a, 2a, usw. zu verstehen ist, während sie in der Abbildung rechts (mit "b" bezeichnet) im entspannten Zustand gezeigt sind, was entsprechend als Figur 1b, 2b, usw. zu verstehen ist. Dasselbe gilt auch für die in den Figuren 8a und 8b gezeigten, weiteren Ausführungsformen einer Nutverschlussanordnung.

In Bezug auf Figur 1a ist das Federelement 4 mittels eines Haftmittels 5 in Form eines geeigneten Klebstoffs - beispielsweise einem Klebstoff auf Epoxidharzbasis - lösbar am Bezugskörper 3 und am Nutenstein 2 befestigt. In dieser Ausführungsform ist das Federelement 4 eine einstückige, streifenförmige Blattfeder aus Isoliermaterial mit einer Vielzahl von elektrisch isolierenden, unidirektional in Richtung der Querachse 9 ausgerichteten Fasern, welche durch ein warmfestes Harz miteinander verbunden sind. Dadurch entsteht ein Federelement 4, mit welchem sich entlang der Querachse 9 in Richtung der Hochachse 13 wirkende Federkräfte gewünschter Stärke aktivieren lassen. In Figur 1a ist das Federelement 4 durch das forcierte Durchbiegen des Federelements 4 und ein Festhalten im durchgebogenen Zustand vorgespannt. Dies bedingt, dass die Haftkraft des Haftmittels 5 im vorgespannten Zustand des Federelements 4 in Y-Richtung insgesamt mindestens so gross sein muss, dass das Federelement 4 in seiner vorgespannten Position gespannt bleibt. In der Folge ist die Nutverschlussanordnung mit dem vorgespannten Federelement 4 als eine kompakte Vormontageeinheit zum Fixieren von Windungen einer elektrischen Maschine bequem in eine ihr zugedachte Nut der elektrischen Maschine einführbar, ohne auseinanderzufallen.

Die Nutverschlussanordnung weist in X-Richtung eine Breite 8 auf. Ein in Richtung X bezüglich dieser Breite 8 in einem Mittenbereich 10 zwischen dem mindestens einen Federelement 4 und dem Bezugskörper 3 etwa quermittig angeordneter Distanzhalter 7 mit quaderförmigem Querschnitt sorgt dafür, dass das vorgespannte Federelement 4 beim Zusammenfügen der Nutverschlussanordnung ausserhalb einer Nut einer elektrischen Maschine in Richtung Y nicht übermässig zusammengepresst werden kann, so dass stets ein minimaler Querschnitt 12 der Haftzone vorhanden ist. Das Vorhandensein des Distanzhalters 7 gewährleistet also eine Haftzone 11 zwischen Federelement 4 und Bezugskörper 3. In der vorliegenden Ausführungsform ist der Distanzhalter Streifen aus einem Isoliermaterial, welches keine oder höchstens eine geringe Haftung mit dem Haftmittel 5 eingeht. Das Federelement 4 wirkt im Querschnitt gemäss Figur 1 gesehen als Biegebalken, welcher sich in Y-Richtung innerhalb bestimmten, von Delaminationsrandbedingungen definierten Grenzen durchbiegen lässt.

Im vorgespannten Zustand des Federelements 4 gemäss Figur 1a misst dessen Gesamthöhe h weniger als im aktivierten Zustand gemäss Figur 1b mit einer Gesamthöhe von h+x, welche auf der rechten Blatthälfte dargestellt ist. Der Höhenunterschied von h zu h+x resultiert aus dem sich in Richtung der Hochachse 13 erstreckenden Teil "x" des Federweges des Federelements 4.

Die Nutverschlussanordnung 1 ist mittels einer geeigneten Wärmezufuhr, beispielsweise einem Heissluftföhn, vom vorgespannten Zustand gemäss Figur 1a in den entspannten Zustand gemäss Figur 1b überführbar. Unter Einfluss der Wärmezufuhr verliert das Haftmittel 5 beim Überschreiten einer bestimmten Temperatur seine Klebkraft, so dass sich das im Querschnitt als Biegebalken agierende Federelement 4 entspannen kann. Daher wölbt es sich bei den illustrierten Ausführungsformen in Richtung Y mehr durch, als im vorgespannten Zustand. In der Folge presst das Federelement 4 den Bezugskörper 3 und den Nutenstein 2 im aktivierten Zustand in Richtung Y auseinander, so dass zwischen dem (in Figur 1b gestrichelt dargestellten) Distanzhalter 7 und einem bezüglich der Breite 8 quermittigen Innenscheitel des Federelements 4 und dem Bezugskörper 3 eine sich in Y-Richtung ertreckende Distanz maximal ist.

Aus der **Figur 1b** geht hervor, dass das Haftmittel 5 im entspannten Zustand des Federelements 4 nicht mehr illustriert ist. Diese Illustrationsweise bedeutet jedoch nicht, dass das Haftmittel 5 nach der Aktivierung des Federelements 4 gar nicht mehr vorhanden ist, sondern lediglich, dass das Haftmittel 5 für die Funktion des federelements 4 im eingebauten Zustand in einer Nut einer elektrischen Maschine keine Bedeutung mehr hat. In einer ersten Ausführungsform ist das Haftmittel nach der Aktivierung des Federelements 4 beispielsweise als pulverartiger Rückstand enthalten.

In einer zweiten Ausführungsform verbleibt das Haftmittel 5 einseitig am Bezugskörper 3 und allenfalls am Nutenstein 2 oder aber am Federelement 4 selber haften.

In der in Figur 1b gezeigten Ausführungsform (gestrichelt dargestellt) haftet der Distanzhalter 7 am Bezugskörper 3. Wenn der der Distanzhalter 7 hingegen nach dem Aktivieren des Federelements 4 nicht am Bezugskörper 3 haften bleibt, lässt er sich in Richtung der Längsachse Z herausziehen.

In **Figur 2a** ist eine zweite Ausführungsform 1a der erfindungsgemässen Nutverschlussanordnung mit vorgespanntem Federelement 4 dargestellt. Da der konzeptionelle Aufbau ähnlich wie bei der in Figur 1 dargestellten ersten Ausführungsform ist, wurden identische Elemente mit denselben Bezugszeichen und gleich/ähnlich wirkende Elemente mit entsprechend ergänzten Bezugszeichen, beispielsweise Index "a", "b" usw. versehen. Nachfolgend wird deshalb nur auf die Unterschiede zur Nutverschlussanordnung 1 gemäss Figur 1 eingegangen.

Bei der in Figur 2 dargestellten Ausführungsform ist der Distanzhalter 7 von Figur 1a in Form einer stufenförmigen Erhebung 7a vollständig in den Bezugskörper 3a integriert.

In **Figur 3a** ist eine dritte Ausführungsform 1b der erfindungsgemässen Nutverschlussanordnung mit vorgespanntem Federelement 4 dargestellt. Da der konzeptionelle Aufbau ähnlich wie bei der in Figur 1 dargestellten ersten Ausführungsform ist, wurden identische Elemente mit denselben Bezugszeichen und gleich/ähnlich wirkende Elemente mit entsprechend ergänzten Bezugszeichen versehen. Nachfolgend wird deshalb nur auf die Unterschiede zur Nutverschlussanordnung 1 gemäss Figur 1 eingegangen.

Bei der in Figur 3 dargestellten Ausführungsform ist das Federelement 4 nicht thermisch, sondern rein mechanisch aktivierbar. Dazu weist der Distanzhalter 7b eine dem Federelement 4 zugewande, stirnseitig zugängliche Öffnung 15 auf, welche eine bezugskörperseitige Sollbruchstelle zwischen Haftmittel 5 und dem Federelement 4 bildet. Bei dieser Ausführungsform erfolgt die Überführung der Nutverschlussanordnung 1b vom vorgespannten Zustand gemäss Figur 3a in den entspannten Zustand gemäss Figur 3b mit Hilfe eines Aufbrechwerkzeuges. Dieses Aufbrechwerkzeug ist beispielsweise ein schraubendreherähnlicher Gegenstand, dessen Klinge in einem ersten Schritt in die Öffnung 15 einbringbar ist. In einem nachfolgenden zweiten Schritt wird das freie Ende des schraubendreherähnlichen Gegenstandes an dessen Griff in Richtung der Hochachse 13 um die Querachse 9 bewegt wird oder mit einem Schlaggegenstand in Richtung der Längsachse Z in die Öffnung 15 eingeschlagen.

Infolge des Durchbiegens des Federelements 4 in Richtung der Hochachse 13 um die Längsachse 6 bricht auch die Haftverbindung zwischen Nutenstein 2 und Federelement 4 auf.

Obwohl bei der in Figur 3 gezeigten Ausführungsform der Distanzhalter 7b als in der aktivierten Nutverschlussanordnunbg 1b gezeigt ist, sind Ausführungsformen Distanzhalter denkbar, in welchen der Distanzhalter 7b nach dem Aktivieren aus der Nutverschlussanordnunbg 1b entfernbar ist.

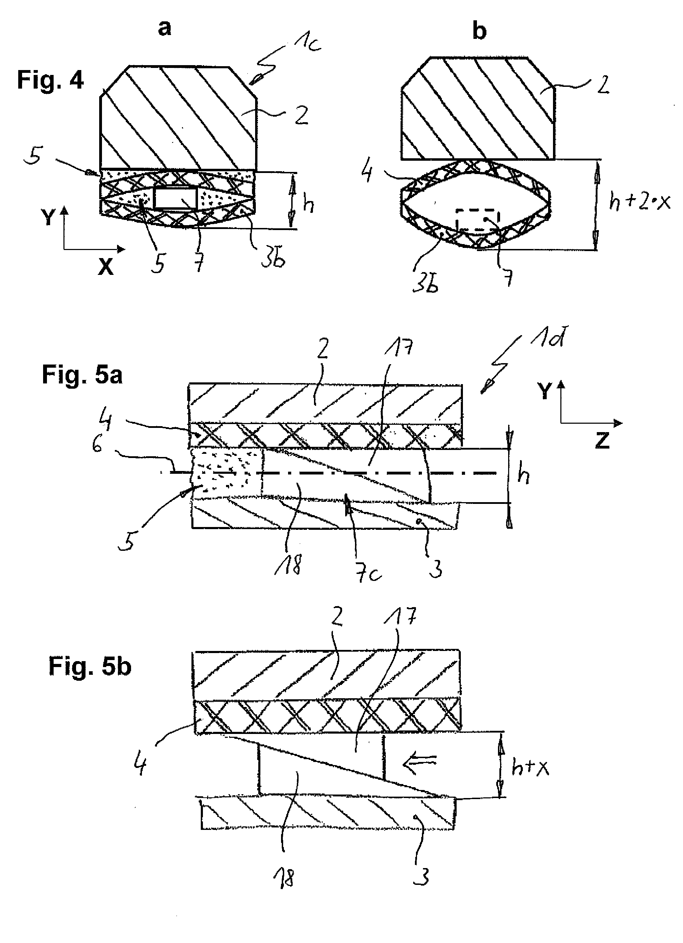

In **Figur 4a** ist eine vierte Ausführungsform 1d der erfindungsgemässen Nutverschlussanordnung mit vorgespanntem Federelement 4 dargestellt. Da der konzeptionelle Aufbau ähnlich wie bei der in Figur 1 dargestellten ersten Ausführungsform ist, wurden identische Elemente mit denselben Bezugszeichen und gleich/ähnlich wirkende Elemente mit entsprechend ergänzten Bezugszeichen versehen. Nachfolgend wird deshalb nur auf die Unterschiede zur Nutverschlussanordnung 1 gemäss Figur 1 eingegangen.

Bei der in Figur 4 dargestellten Ausführungsform ist der Bezugskörper 3b nicht steif, wie in den vorangegangenen Ausführungsformen, sondern ebenfalls federnd, da der Bezugskörper 3b selber ein Federelement im Stil des Federelements 4 ist. Die Aktivierung des Federelements 4, sowie des ein ein Federelement bildenden Bezugskörpers 3b erfolgt wiederum thermisch.

Wäre der Distanzhalter hingegen wie in Figur 3 beschrieben gestaltet, so wäre das mindestens eine Federelement auch mit einem schraubendreherähnlichen Gegenstand mechanisch aktivierbar. Wenn der Bezugskörper 3b gar identisch zum Federelement 4 ist, dann weist diese Ausführungsform im Vergleich zur in Figur 1 gezeigten Ausführungsform einen doppelt so grossen Federweg "x" auf, so dass sich der Nutenstein 2 im entspannten Zustand (Figur 4b) gar um die Distanz h plus 2 mal x vom Scheitelpunkt des Bezugskörpers 3b entfernt ist.

In **Figur 5a** ist eine fünfte Ausführungsform 1e der erfindungsgemässen Nutverschlussanordnung mit vorgespanntem Federelement 4 im Längsschnitt entlang der sich in Z-Richtung erstreckenden Längsachse 6 dargestellt. Im Unterschied zur in Figur 1 gezeigten Ausführungsform der Nutverschlussanordnung ist der Distanzhalter 7c nun mehrteilig und weist einen ersten keilförmigen Formkörper 17 und einen relativ zum ersten Formkörper 17 bewegbaren zweiten keilförmigen Formkörper 18 auf. Eine vom Haftmittel 5 ausgeübte Haftkraft in Y-Richtung zwischen Bezugskörper 3 und Nutenstein 2 ist durch eine Relativbewegung des ersten Formkörpers 17 zum zweiten Formkörper 18 in Z-Richtung mechanisch aufbrechbar, da das Haftmittel 5 zwischen den Formkörpern 17, 18 selber, sowie zwischen den Formkörpern 17, 18 und dem Nutenstein 2 keine Haftwirkung hat. Die Relativbewegung ist beispielsweise mit Hammerschlägen über einer Durchschlag oder dergleichen in Richtung des Doppelpfeils auf den ersten Formkörper erzielbar. Mit Vorteil sind die Keilflächen so ausgebildet, dass sie einen geringen Reibungswiderstand zueinander haben.

Nach dem Aufbrechen der Haftkraft ist das Federelement 4 aktiviert. Infolge des Durchbiegens des Federelements 4 in Richtung der Hochachse 13 um die Längsachse 6 bricht auch die Haftverbindung zwischen Nutenstein 2 und Federelement 4 auf.

Je nach Ausführungsform sind im aktivierten Zustand des Federelements 4 die Formkörper 17, 18 gar lose und können in **Z**-Richtung aus dem Zwischenraum zwischen Bezugskörper 3 und Federelement 4 herausgezogen werden.

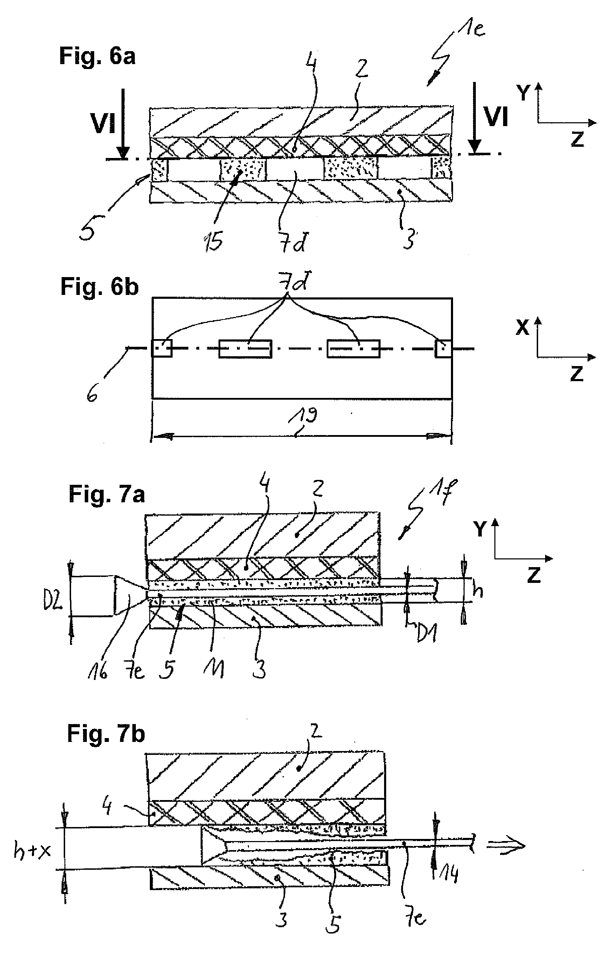

In **Figur 6a** ist eine sechste Ausführungsform 1e der erfindungsgemässen Nutverschlussanordnung mit vorgespanntem Federelement 4 im Längsschnitt entlang der sich in Z-Richtung erstreckenden Längsachse 6 dargestellt. Im Unterschied zur in Figur 1 gezeigten Ausführungsform der Nutverschlussanordnung ist der Distanzhalter 7d in Richtung der Längsachse 6 mehrteilig gestaltet und in Z-Richtung diskontinuierlich über eine Länge 19 der Nutverschlussanordnung 1e regelmässig verteilt angeordnet (siehe Fig. 6b, welche einen Schnitt entlang der Ebene VI-VI in Figur 6a zeigt). Bei dieser Ausführungsform 1e ist das Federelement 4 nicht mechanisch, sondern beispielsweise wieder thermisch aktivierbar.

In **Figur 7a** ist eine siebte Ausführungsform 1f der erfindungsgemässen Nutverschlussanordnung mit vorgespanntem Federelement 4 im Längsschnitt entlang der sich in Z-Richtung erstreckenden Längsachse 6 dargestellt. Im Unterschied zur in Figur 1 gezeigten Ausführungsform der Nutverschlussanordnung weist der Distanzhalter 7e in Richtung der Längsachse 6 endseitig, einen Aufbrechkörper 16 zum mechanischen Aktivieren des Federelements 4 auf. Dieser Aufbrechkörper 16 ist im vorgespannten Zustand des Federelementes 4, in Z-Richtung gesehen ausserhalb der Haftzone 11 angeordnet. Der Aufbrechkörper 16 ist kegelförmig und hat in Y-Richtung eine Ausdehnung D2, die grösser ist, als eine Querausdehnung 14,D1 des Distanzhalters in der Haftzone 11 und die grösser ist, als die Höhe h. Die Ausdehnung D2 des Aufbrechkörpers 16 ist am distalen Ende des Distanzhalters maximal.

Zum Aktivieren des Federelementes 4 wird der Distanzhalter 7e an seinem dem Aufbrechkörpers 16 gegenüberliegenden Ende in Richtung des Doppelpfeiles gezogen. Dabei zwängt sich der mit dem zylindrischen Teil des Distanzhalters 7e fest verbundene Aufbrechkörpers 16 ebenfalls in Richtung des Doppelpfeiles zwischen Nutenstein 2 und Bezugskörper 3 hindurch, wodurch die Haftkraft des Haftmittels 5 überschritten und die Verbindung zwischen Nutenstein 2 und Federelement 4, sowie zwischen Federelement 4 und Bezugskörper 3 aufgebrochen wird, worauf das Federelement 4 seine Spannkraft entfalten kann. Die vom zylindrischen Teil des Distanzhalters 7e hinterlassene, tunnelförmige Öffnung definiert dabei die Sollbruchstelle im Haftmittel 5.

In **Figur 8a** ist eine achte Ausführungsform 1g der erfindungsgemässen Nutverschlussanordnung mit vorgespanntem Federelement 4 dargestellt. Da der konzeptionelle Aufbau ähnlich wie bei der in Figur 1 dargestellten ersten Ausführungsform ist, wurden identische Elemente mit denselben Bezugszeichen und gleich/ähnlich wirkende Elemente mit entsprechend ergänzten Bezugszeichen versehen. Nachfolgend wird deshalb nur auf die Unterschiede zur Nutverschlussanordnung 1 gemäss Figur 1 eingegangen.

Anders als bei der in Figur 1 dargestellten Ausführungsform ist anstelle des Haftmittels zwischen Nutenstein 2 und Federelement 4 ein elastisches Mittel 20 in Form eines zumindest in Y-Richtung komprimierbaren, elastischen, geschäumten Körpers 20 angeordnet. In Figur 8a ist der geschäumte Körper 20 im entspannten Zustand gezeigt, während er in der **Figur 8b** in Y-Richtung (in Pfeilrichtung) so teilkomprimiert ist, dass die Nutverschlussanordnung 1g in eine Nut 21 einer elektrischen Maschine 25 einführbar ist (siehe Figur 8c). Sobald die Nutverschlussanordnung 1g in die Nut 21 eingeschoben ist, drückt der geschäumte Körper 20 den Nutenstein 2 wieder vom Federelement 4 weg, so dass die Nutverschlussanordnung 1g in ihrer vorgesehenen Einbauposition selbst dann festgehalten wird, wenn das Federelement 4 noch nicht aktiviert ist.

In **Figur 8c** ist das Federelement 4 in seinem aktivierten Zustand dargestellt. Die Spannkraft des Federelements 4 ist dabei so gross, dass der geschäumte Körper 20 beim Scheitelpunkt des Federelements 4 vollständig zusammengedrückt wird und die Federwirkung des geschäumten Körpers 20 keine wesentliche Wirkung mehr entfaltet. Da das Federelement 4 den Bezugskörper 3 in Richtung X randseitig berührt und den Nutenstein 2 in Y-Richtung beim Scheitelpunkt berührt, presst das Federelement 4 die beim Nutgrund 27 angeordneten Wickelstäbe 26 der elektrischen Maschine 25 fest gegen den Nutgrund 27. Dabei stützt sich der Nutenstein 2 in der Nut 21 gegen die seitlichen Nutschultern 28 ab. Zwischen Bezugskörper 3 und Wickelstäben 26 ist eine Einlage 29 angeordnet.

### BEZUGSZEICHENLISTE

- 1, 1a, 1b, 1c, 1d,1e,1f, 1g: Nutverschlussanordnung
- 2: Nutenstein
- 3 , 3a, 3b: Bezugskörper
- 4: Federelement
- 5: Haftmittel
- 6: Längsachse
- 7,7a,7b,7c,7d,7e: Distanzhalter
- 8: Breite
- 9: Querachse
- 10: Mittenbereich
- 11: Haftzone
- 12: Querschnitt der Haftzone
- 13: Hochachse
- 14: Querausdehnung
- 15: Sollbruchstelle bildende Öffnung
- 16: Aufbrechkörper
- 17: erster keilförmiger Formkörper
- 18: zweiter keilförmiger Formkörper
- 19: Länge
- 20: elastisches Mittel
- 21: Nut
- 25: elektrische Maschine
- 26: elektrische Leiter (Wicklungsstäbe)
- 27: Nutgrund
- 28: Nutschulter
- 29: Einlage

## Patentansprüche

1. Nutverschlussanordnung (1, 1a, 1b, 1c, 1d, 1e, 1f, 1g) mit einem Nutenstein (2), einem Bezugskörper (3, 3a, 3b) sowie mindestens einem Federelement (4), das in einem vorgespannten Zustand mittels eines Haftmittels (5) lösbar am Bezugskörper (3, 3a, 3b) befestigt ist, wobei die Nutverschlussanordnung durch ihre Form eine Längsachse (6) definiert, **dadurch gekennzeichnet, dass** im vorgespannten Zustand des mindestens einen Federelements (4) zwischen dem mindestens einen Federelement (4) und dem Bezugskörper (3, 3a, 3b) nebst dem Haftmittel (5) ein Distanzhalter (7, 7a, 7b, 7c, 7d, 7e) angeordnet ist.

2. Nutverschlussanordnung nach Anspruch 1, **dadurch gekennzeichnet, dass** die Nutverschlussanordnung 1, 1a, 1b, 1c, 1d, 1e, 1f, 1g) eine Breite (8) aufweist, welche sich quer zur Längsrichtung (6) in Richtung einer Querachse (9) der Nutverschlussanordnung erstreckt, wobei der Distanzhalter (7, 7a, 7b, 7c, 7d, 7e) bezüglich dieser Breite (8) in einem Mittenbereich (10) zwischen dem mindestens einen Federelement (4) und dem Bezugskörper (3, 3a, 3b) angeordnet ist.

3. Nutverschlussanordnung nach Anspruch 1 oder 2, **dadurch gekennzeichnet, dass** das Haftmittel (5) in einer Haftzone (11) angeordnet ist, welche Haftzone (11) durch das mindestens eine Federelement (4) im vorgespannten Zustand und den Bezugskörper (3, 3a, 3b) begrenzt ist, wobei die Haftzone (11) einen sich senkrecht zur Längsachse erstreckenden Querschnitt (12) aufweist, dessen Ausdehnung in Richtung einer sich quer zur Längsachse (6) und quer zur Querachse (9) erstreckenden Hochachse (13) beim Distanzhalter (7, 7a, 7b, 7c, 7d, 7e) am grössten ist.

4. Nutverschlussanordnung nach einem der Ansprüche 1 bis 3, **dadurch gekennzeichnet, dass** der Bezugskörper (3b) ein weiteres Federelement ist.

5. Nutverschlussanordnung nach einem der Ansprüche 1 bis 4, **dadurch gekennzeichnet, dass** der Distanzhalter (7a) in einem aktivierten Zustand des mindestens einen Federelements (4) fest mit dem Federelement oder fest mit dem Bezugskörper (7) verbunden ist und/oder dass der Bezugskörper zumindest in Richtung der Hochachse biegesteifer als das mindestens eine Federelement ist.

6. Nutverschlussanordnung nach einem der Ansprüche 1 bis 5, **dadurch gekennzeichnet, dass** der Distanzhalter (7) im vorgespannten Zustand des mindestens einen Federelementes eine sich quer zur Längsrichtung erstreckende Querausdehnung (14) aufweist, und dass in der Nutverschlussanordnung eine eine Sollbruchstelle zum mechanischen Aktivieren des mindestens einen Federelements (4) bildende Öffnung (15) zur Aufnahme eines Aufbrechwerkzeuges dadurch erzeugbar ist, dass der Distanzhalter (7) unter Bewahrung oder Verengung seiner Querausdehnung (14) in Richtung der Längsachse (6) aus der Nutverschlussanordnung herausziehbar ist.

7. Nutverschlussanordnung nach einem der Ansprüche 1 bis 6, **dadurch gekennzeichnet, dass** der Distanzhalter (7b) in Richtung der Längsachse (6) stirnseitig eine Aufnahmeöffnung (15) zur Aufnahme eines Aufbrechwerkzeuges aufweist, wobei die Aufnahmeöffnung (15) in Richtung der Hochachse vom mindestens einen Federelement (4) im vorgespannten Zustand und/oder dem Bezugskörper (3) begrenzt ist.

8. Nutverschlussanordnung nach einem der Ansprüche 1 bis 6, **dadurch gekennzeichnet, dass** die Nutverschlussanordnung in Richtung der Längsachse stirnseitig beim Distanzhalter eine Aufnahmeöffnung zur Aufnahme eines Aufbrechwerkzeuges aufweist, wobei die Aufnahmeöffnung in Richtung der Hochachse vom mindestens einen Federelement im vorgespannten Zustand und/oder dem Bezugskörper begrenzt ist.

9. Nutverschlussanordnung nach einem der Ansprüche 1 bis 8, **dadurch gekennzeichnet, dass** der Distanzhalter (7e) einen Aufbrechkörper (16) aufweist, welcher Aufbrechkörper (16) im vorgespannten Zustand des mindestens einen Federelementes (4) ausserhalb der Haftzone (11) angeordnet ist, wobei der Aufbrechkörper (16) zumindest in einer Richtung quer zur Längsachse (6) eine Ausdehnung (D2) hat, die grösser ist, als eine Querausdehnung (D1) des Distanzhalters (7e) in der Haftzone (11) .

10. Nutverschlussanordnung nach einem der Ansprüche 1 bis 8, **dadurch gekennzeichnet, dass** der Distanzhalter (7c) einen ersten keilförmigen Formkörper (17) und einen relativ zum ersten Formkörper (17) bewegbaren zweiten keilförmigen Formkörper (18) aufweist, so dass eine vom Haftmittel (5) ausgeübte Haftkraft durch eine Relativbewegung des ersten Formkörpers (17) zum zweiten Formkörper (18) in Richtung der Längsachse (6) mechanisch aufbrechbar ist.

11. Nutverschlussanordnung nach einem der Ansprüche 1 bis 5, **dadurch gekennzeichnet, dass** der Distanzhalter (7d) in Richtung der Längsachse (6) mehrteilig ist und in Längsrichtung diskontinuierlich über eine Länge (19) der Nutverschlussanordnung verteilt angeordnet ist.

12. Nutverschlussanordnung nach einem der Ansprüche 1 bis 11, **dadurch gekennzeichnet, dass** das mindestens eine Federelement (4) über ein komprimierbares, elastisches Mittel (20) am Nutenstein (1) befestigt ist, wobei das elastische Mittel (20) derart beschaffen und dimensioniert ist, dass es in einer Nut (21) einer elektrischen Maschine genügend Kompressionskraft in Richtung der Hochachse (13) entwickelt, derart dass die Nutverschlussanordnung (1g) mit vorgespanntem Federelement (4) nicht aus der Nut (21) heraus fällt.

13. Elektrische Maschine (25) mit einer Nut (21), in welcher mindestens ein elektrischer Leiter (26) angeordnet ist, welcher Leiter (26) mit mindestens einer Nutverschlussanordnung (1g) nach einem der vorangehenden Ansprüche in der Nut (21) befestigt ist.

14. Verfahren zum mechanischen Aktivieren mindestens eines Federelementes (4) einer Nutverschlussanordnung (1g) in einer Nut (21) einer elektrischen Maschine (25), beinhaltend die folgenden Schritte:
a) Einschieben einer Nutverschlussanordnung (1g) mit mindestens einem Federelement (4) in vorgespanntem Zustand gemäss einem der Ansprüche 1 bis 12 in die Nut (21) der elektrischen Maschine (25);
b) Überführen des mindestens einen Federelementes (4) der Nutverschlussanordnung (4) vom vorgespannten Zustand in einen aktivierten Zustand durch ein Aufbrechen einer vom Haftmittel (5) ausgeübten Haftkraft.

15. Verfahren nach Anspruch 14, **dadurch gekennzeichnet, dass** das Überführen des mindestens einen Federelementes der Nutverschlussanordnung vom vorgespanntem Zustand in einen aktivierten Zustand durch ein mechanisches Aufbrechen einer vom Haftmittel ausgeübten Haftkraft erfolgt, und zwar via
c) Ein Herausziehen des Distanzhalters mitsamt einem daran befestigten, als Keil wirkenden Aufbrechkörper aus der Nutverschlussanordnung in Richtung der Längsachse durch eine vom Distanzhalter definierte, tunnelförmige Öffnung; oder
d) Ein Herausziehen des Distanzhalters homogenen Querschnitts aus der Nutverschlussanordnung in Richtung der Längsachse, gefolgt von einem Einbringen eines als Brecheisen wirkenden Aufbrechwerkzeuges in eine vom Distanzhalter hinterlassene, tunnelförmige Öffnung, und anschliessendem Aufstemmen; oder
e) Ein Einbringen eines als Brecheisen wirkenden Aufbrechwerkzeuges in eine stirnseitig (=in Richtung der Längsachse) angeordnete Aufnahmeöffnung der Nutverschlussanordnung beim Distanzhalter, und anschliessendem Aufstemmen; oder
f) Ein Einbringen eines als Brecheisen wirkenden Aufbrechwerkzeuges in eine stirnseitig (=in Richtung der Längsachse) angeordnete Aufnahmeöffnung des Distanzhalters, und anschliessendem Aufstemmen; oder
g) Ein Verschieben eines ersten keilförmigen Formkörper des Distanzhalters relativ zu einem zweiten keilförmigen Formkörper des Distanzhalters in Richtung der Längsachse.
